# FASCICULE DE BREVET EUROPEEN

(11) **EP 2 391 467 B1**
(45) Date de publication et mention de la délivrance du brevet: **20.03.2013**
(21) Numéro de dépôt: 10707314.0
(22) Date de dépôt: 19.01.2010
(51) Int. Cl.: B21H 3/02, B21H 3/04, B21H 3/06, B21H 3/08, F16B 33/02

(54) **VIS OU ECROU PRESENTANT UN FILETAGE DONT UN PAS VARIE ET OUTILS POUR REALISER UNE TELLE VIS OU UN TEL ECROU**
SCHRAUBE ODER MUTTER MIT EINEM GEWINDE MIT VARIABLER STEIGUNG UND WERKZEUGE ZUR HERSTELLUNG SOLCH EINER SCHRAUBE ODER MUTTER
SCREW OR NUT COMPRISING A THREAD WITH VARYING PITCH AND TOOLS FOR MAKING SUCH A SCREW OR NUT

(30) Priorité: 29.01.2009 FR 0950555
(43) Date de publication de la demande: 07.12.2011
(73) Titulaire: Lisi Aerospace, 75012 Paris (FR)
(72) Inventeur: GALIPAUD, Joachim, F-22440 Tremuson (FR)
(74) Mandataire: Schmit, Christian Norbert Marie
(86) Numéro de dépôt international: PCT/FR2010/050072
(87) Numéro de publication internationale: WO 2010/086538

(56) Documents cités:
- EP-A1- 1 655 090
- EP-A2- 0 296 594
- WO-A1-02/100570
- DE-A1- 10 331 713
- DE-A1- 10 339 643
- DE-A1-102007 007 808
- GB-A- 569 581
- GB-A- 1 454 769
- JP-A- 57 094 439
- US-A- 4 369 644

## Description

La présente invention se rapporte à un filetage à distribution de contraintes.

Le domaine technique de l'invention est, d'une façon générale, celui des vis et des écrous. Plus particulièrement, l'invention concerne une variation de pas du filetage des vis et des écrous.

Un filet d'un filetage peut présenter diverses géométries de profil : il peut être polygonal ou quelconque et aussi bien symétrique, qu'asymétrique.

Pour fileter une surface cylindrique, et ainsi former une vis ou un écrou, on connaît plusieurs méthodes: l'usinage, le moulage et le roulage à chaud ou à froid. Le roulage consiste en une déformation de matière. De nombreux matériaux, même non-métalliques peuvent se prêter au roulage à froid. Les autres matériaux peuvent être chauffés à différentes températures pendant une courte durée.

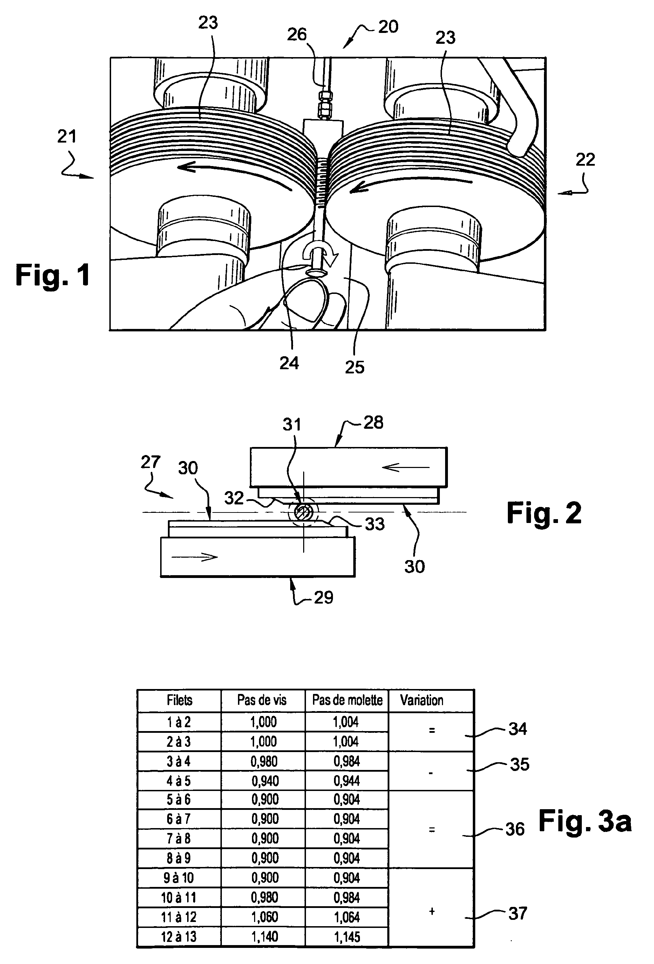

La figure 1 représente schématiquement une vue d'ensemble en perspective oblique d'un exemple de roulage de l'état de la technique. Un outillage spécifique 20 est formé de deux cylindres appelés molettes 21 et 22. Chaque molette 21 et 22 présente plusieurs filets 23 qui sont une contrepartie de celui souhaité pour une tige 24 à rouler. L'outillage 20 est placé sur une machine appelée une rouleuse non représentée. Dans un exemple, les molettes présentent un diamètre beaucoup plus grand, entre dix et trente fois plus grand, que celui de la tige 24 à fileter.

Le roulage de la tige 24 entre les molettes 21 et 22 comporte des étapes dans lesquelles
- on règle les molettes 21 et 22 en concordance et on les indexe,
- on cale la tige 24 contre la première molette 21, contre une butée 26 et sur un support 25, le support 25 permettant un réglage en hauteur de la tige 24, parallèlement à l'axe des molettes,
- on approche la deuxième molette 22 de manière à enserrer la tige 24,
- on fait tourner les molettes 21 et 22 dans un même sens pour faire rouler la tige 24 sur elle-même et ainsi la rouler jusqu'à reproduire le filetage désiré sur celle-ci.

L'axe de rotation de la tige est situé légèrement en-dessous d'un niveau formé par les axes de rotation des molettes 21 et 22 afin d'éviter toute éjection possible de la tige 24, pendant le roulage.

Dans l'exemple, le roulage est en plongée. La tige 24 ne se déplace pas car elle est calée contre la butée 26 faisant face à son grand axe. La longueur du filetage de la vis obtenue dépend de la largeur des molettes 21 et 22 et de la géométrie de la tige 24.

La figure 2 représente schématiquement une vue de profil d'un autre exemple de roulage de l'état de la technique. Un outillage spécifique constitué de deux peignes 28 et 29 plats rectangulaires. Chaque peigne 28 et 29 présente une série de filets obliques 30 allongés selon un grand côté du rectangle, et aptes à déformer une tige 31. Les filets 30 sont une contrepartie du filet souhaité pour la tige 31.

Le roulage entre peignes 28 et 29 comporte des étapes dans lesquelles
- on règle les peignes 28 et 29 en concordance et on les indexe,
- on positionne la tige 31 contre une extrémité 32 du premier peigne 28, parallèlement à la largeur de ce peigne 28,
- on plaque une extrémité opposée 33 du deuxième peigne 29, parallèlement au premier peigne 28, de manière à enserrer la tige 31,
- on fait aller ou aller et venir en translation les peignes 28 et 29 pour faire rouler la tige 31 sur elle-même et ainsi la rouler.

Dans une variante, un des deux peignes est fixe.

Parmi les méthodes de filetage, pour des raisons de productivité, de qualité et/ou de résistance mécanique, l'homme du métier utilise généralement le roulage.

En effet, le roulage présente l'avantage de conserver et de renforcer le fibrage de la matière, ce qui lui confère une meilleure résistance mécanique et une meilleure tenue en fatigue.

Ces techniques de roulage permettent essentiellement d'obtenir des filets réguliers, à pas constant.

Mais un problème technique subsiste avec des filets réguliers engagés dans un écrou lui-même à filetage régulier. Par nature, la répartition des efforts de charge sur les filets en prise d'une vis ou d'un écrou standard est très inégale. En effet, le premier filet en prise, normalement le plus proche d'une tête de vis, supporte une grande majorité de la charge. Cette charge se réduit de manière très importante dès le deuxième filet. Dans un exemple, si la charge est trop importante, le premier filet chargé cède. La charge est alors reportée sur un autre filet, qui cède à son tour et ainsi les filets cèdent un à un.

Un des buts essentiels de l'invention est d'optimiser la résistance et la tenue en fatigue et en statique des vis et des écrous en répartissant au mieux la charge sur plusieurs filets. Selon l'invention, on entend par vis tout élément solide mâle présentant un filetage extérieur et par écrou tout élément solide femelle présentant un filetage intérieur.

Pour aboutir à ce résultat, on a
- réalisé différents pas variables sur des écrous, tout en restant réguliers sur la vis,
- réalisé différents pas variables sur des vis, tout en restant réguliers sur l'écrou,
- réalisé différents pas variables sur des écrous, tout en faisant varier le pas de la vis,
- réalisé une série d'essais avec plusieurs conditions d'utilisation de l'élément solide telles qu'une charge statique ou dynamique, une contrainte en flexion et ou en traction....

On a découvert que la modification du pas en fonction de l'utilisation de l'élément solide permet d'optimiser la répartition des efforts. Dans l'invention, on a alors eu l'idée d'utiliser de manière maîtrisée tout l'intervalle de tolérance du pas choisi, afin de pouvoir faire évoluer le pas de la manière la plus adaptée à chaque cas de charge.

Dans un exemple particulier, on a découvert que c'est le pas croissant qui optimise au mieux la répartition des efforts. Selon l'invention, on a alors eu l'idée de s'approcher le plus possible d'un minimum d'une tolérance de pas choisie, afin de pouvoir faire croître le pas, ce qui permet d'avoir une longue croissance de pas, ainsi que, de préférence, une accélération de croissance de pas.

Toujours dans cet exemple, ce sont cette forte croissance et, de préférence, cette accélération qui optimisent la répartition d'une charge axiale sur la vis.

Avec l'invention, on obtient une distribution de contraintes sur au moins deux, et en général trois ou quatre filets. Le filetage est ainsi beaucoup plus résistant.

Dans l'art antérieur, on connaît des filetages dont la profondeur et/ou le pas varient beaucoup afin de provoquer un auto-serrage d'une vis sur un écrou ou d'un écrou sur une vis.

Dans l'état de la technique, on connaît notamment l'enseignement du document JP2007321858(A) qui divulgue un filetage dont le pas croît graduellement sans provoquer d'auto-serrage. La répartition obtenue avec ce filetage n'est pourtant pas suffisante pour assurer une bonne tenue mécanique des vis et des écrous dans leurs nombreuses utilisations.

Il est également connu le document DE10339643A1, qui divulgue un filetage dont le pas varie de manière constante. ,

On connaît également l'enseignement du document GB1454769, qui est considéré comme l'état de la technique le plus proche et qui divulgue un filetage au pas décroissant de manière constante, puis croissant de manière constante.

De son côté, l'invention a pour objet une vis ou un écrou présentant un filetage dont un pas varie dans un intervalle prédéfini, entre un minimum et un maximum,
- l'intervalle appartenant à une tolérance fixée,
- le pas décroissant et croissant de manière maîtrisée,
caractérisé en ce que, à l'endroit vissé,
- la pente de décroissance de pas présente deux inclinaisons, à savoir une inclinaison moyenne et une inclinaison forte, et/ou
- la pente de croissance de pas présente deux inclinaisons, à savoir une inclinaison moyenne et une inclinaison forte.

L'invention concerne également un outil de roulage de type molette cylindrique présentant une série de filets oblique aptes à déformer une tige pour réaliser une vis selon l'invention, les filets présentant un profil de base dont un sommet est appelé sommet de filet, caractérisé en ce que
- pour une même abscisse le long de la molette, toutes les têtes de filets sont séparées les unes des autres par une même distance.

L'invention concerne également un procédé de roulage d'une tige au moyen de deux molettes à pas variable selon l'invention, dans lequel
- on règle les molettes en concordance et on les indexe,
- on chauffe la vis,
- on cale la vis contre une première molette et contre un support,
- on approche une deuxième molette de manière à enserrer la tige,
- on fait tourner les molettes dans un même sens pour faire rouler la vis sur elle-même et ainsi rouler la tige avec un pas variable.

L'invention concerne également un outil de roulage de type peigne plat rectangulaire présentant une série de filets obliques allongés selon un grand côté du rectangle, et aptes à déformer une tige pour réaliser une vis selon l'invention, les filets présentant un profil de base dont un sommet est appelé tête de filet, caractérisé en ce que
- pour une même abscisse mesurée sur un petit côté du rectangle, toutes les têtes de filets sont séparées les unes des autres par une même distance.

L'invention concerne également un procédé de roulage d'une tige au moyen de deux peignes à pas variable selon l'invention, dans lequel
- on règle les peignes en concordance et on les indexe,
- on positionne la tige contre une extrémité d'un premier peigne, parallèlement à une largeur de ce peigne,
- on plaque une extrémité opposée d'un deuxième peigne, parallèlement au premier peigne, de manière à enserrer la tige,
- on fait aller ou aller et venir en translation au moins un peigne pour faire rouler la vis sur elle-même et ainsi rouler la tige avec un pas variable.

L'invention concerne également un procédé de moulage d'une vis selon l'invention, dans lequel
- on utilise un moule présentant une paroi intérieure dont au moins une partie est filetée, le filetage étant une contrepartie du filetage de la vis.

L'invention concerne également un procédé d'usinage d'un écrou selon l'invention, dans lequel
- on réalise le filetage au moyen d'un outil à fileter.

L'invention concerne également un procédé de moulage d'un écrou selon l'invention, dans lequel
- on utilise un moule présentant en son centre une vis dont le filetage est une contrepartie du filetage de l'écrou.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- figure 1, déjà décrite : une représentation schématique d'une vue d'ensemble en perspective oblique d'un exemple de roulage de l'état de la technique,
- figure 2, déjà décrite : une représentation schématique d'une vue de profil d'un exemple de roulage de l'état de la technique,
- figure 3a : un premier exemple de tableau de variation de pas des filets d'une vis et d'une molette de roulage,
- figure 3b : une représentation schématique d'une vue de face de la vis et d'une périphérie, mise à plat, du premier exemple de molette,
- figure 3c : une représentation graphique de la variation de pas du même exemple de vis,
- figure 4a : un deuxième exemple de tableau de variation de pas des filets d'une vis et d'une molette de roulage selon l'invention,
- figure 4b : une représentation graphique de la variation de pas du même exemple de vis selon l'invention,
- figure 4c : une représentation graphique de la variation de pas du même exemple de molette selon l'invention,
- figure 4d : une représentation schématique d'une vue en coupe d'un écrou et du même exemple de vis selon l'invention,

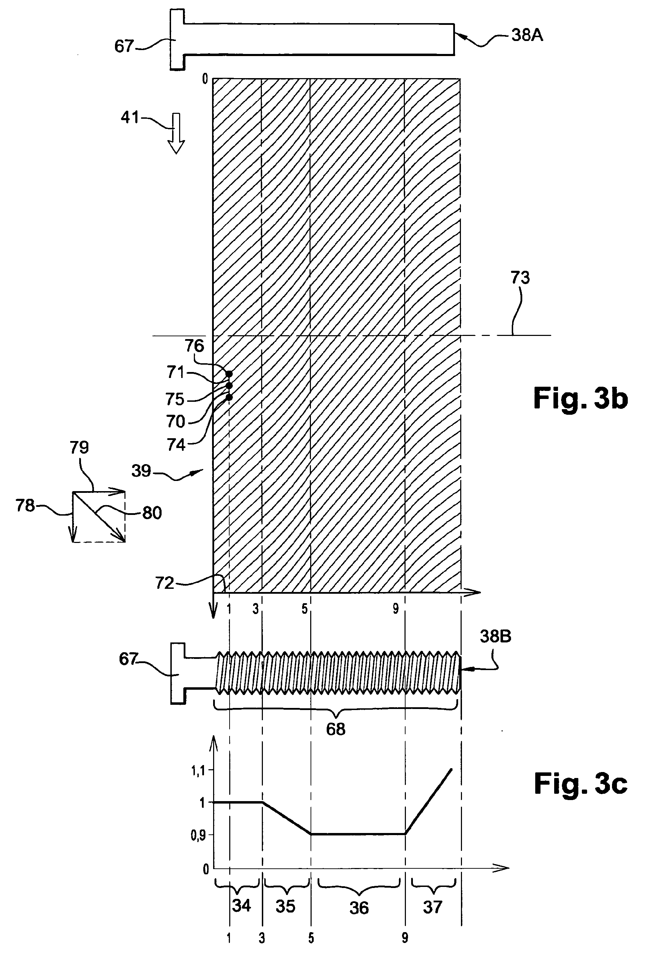

Les figures 3a, 3b et 3c montrent un premier exemple de variation de pas des filets d'une vis et d'une molette de roulage. L'amplitude de variation de pas de cet exemple est très exagérée dans un souci de visibilité de la représentation graphique.

Dans un exemple, l'invention porte sur une vis de bielle de véhicule de type automobile qui doit supporter par ailleurs des efforts particulièrement élevés.

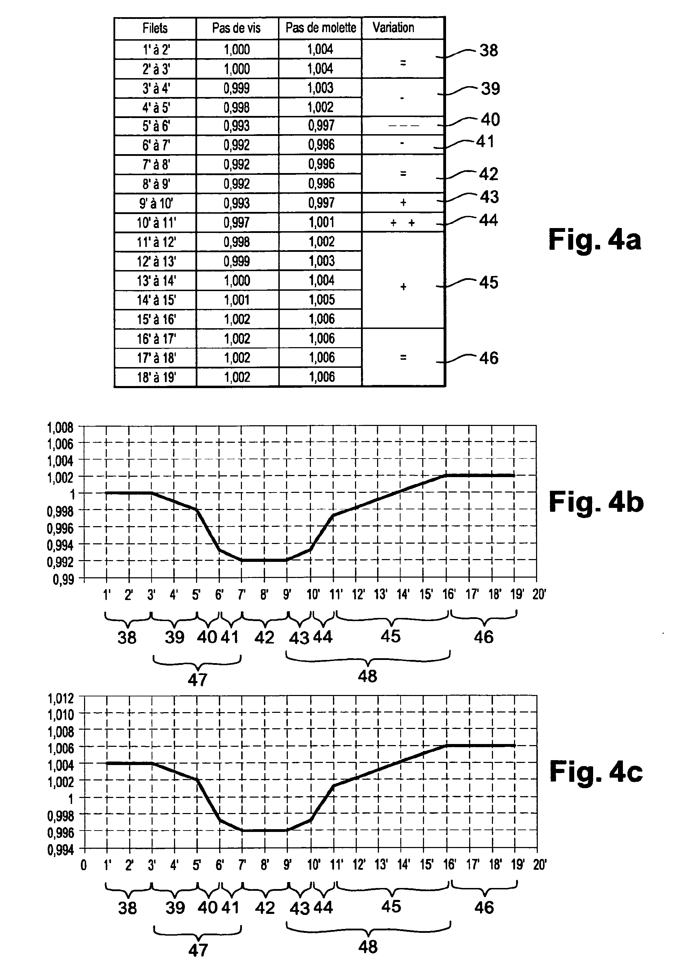

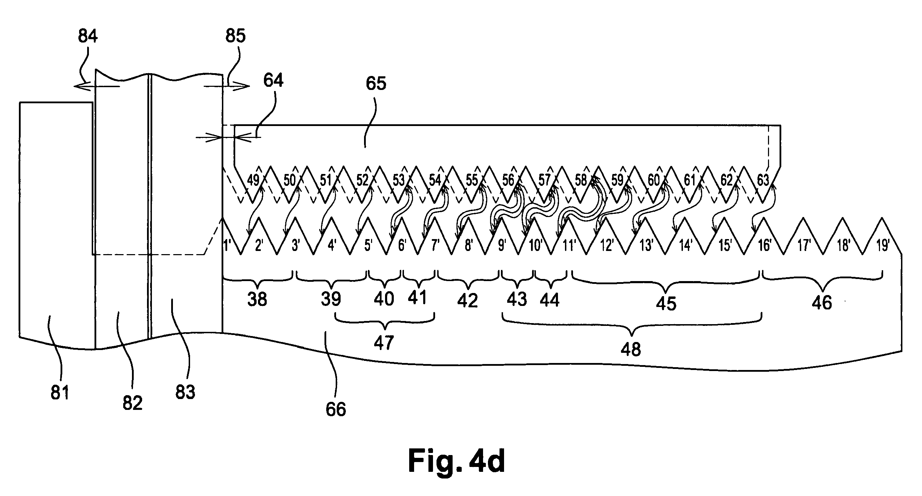

Le tableau de la figure 3a montre qu'il existe un rapport entre un pas de molette froide et un pas de vis chaude correspondante. Dans les exemples des figures 3a, 3b, 3c, 4a, 4b, 4c, et 4d, ce rapport est de 1,004. Ce rapport est un exemple relatif au roulage d'une pièce à base de Nickel que l'on a portée à une température élevée pendant quelques secondes. Dans des variantes, le rapport est différent, par exemple égal à 1 pour un roulage à froid puisque les problèmes de dilatation ne jouent pas.

Dans des variantes, d'autres matériaux peuvent être utilisés tels que des titanes, des alliages à base de Cobalt, de Nickel ou d'inox.

On considère, dans cet exemple, un pas de référence égal à 1 millimètre.

Entre les filets 1 à 2 et 2 à 3, les pas respectent une constante 34 égale à 1 pour la vis et à 1,004 pour les molettes. Entre les filets 3 à 4 et 4 à 5, les pas subissent une décroissance 35 moyenne jusqu'à atteindre 0,940 pour la vis et 0,944 pour les molettes. Entre les filets 5 à 6, 6 à 7, 7 à 8 et 8 à 9, les pas respectent une constante 36 égale à 0,900 pour la vis et à 0,904 pour les molettes. Entre les filets 9 à 10, 10 à 11 et 11 à 12, les pas subissent une forte croissance 37 jusqu'à atteindre 1,140 pour la vis et 1,145 pour les molettes.

Le pas de vis varie donc, de façon maîtrisée. Selon l'invention, on entend par maîtrisée une précision de variation de pas de l'ordre du micromètre, dans un intervalle prédéfini ici, entre un minimum de 0,900 et un maximum de 1,140.

Le pas des molettes varie, également avec une précision de l'ordre du micromètre, dans un intervalle prédéfini, entre un minimum de 0,904 et un maximum de 1,145.

La figure 3b montre une périphérie, mise à plat, d'un outil de roulage de type molette cylindrique 39 du même type que celles de la figure 1. La molette 39 présente une série de filets hélicoïdaux 40 allongés selon un grand côté du rectangle, et aptes à déformer une tige 38A, en haut du dessin, pour réaliser une vis 38B, en bas du dessin, et dont le pas varie comme dans le tableau de la figure 3a. Dans un exemple, les filets 40 présentent une section triangulaire équilatérale dont un sommet est appelé sommet de filet. Pour une même abscisse le long de la molette 39, tous les sommets de filets des filets 40 sont séparés les uns des autres par une même distance 78. A cet égard, la figure 3b indique que la distance sépare des sommets de filets consécutifs selon une mesure circonférentielle de la molette. Un écart 80 sépare des sommets de filets consécutifs selon une direction axiale de la molette. Le pas 79 de la vis résulte de la variation de la distance 78 en fonction de l'abscisse 72.

Sur la figure 3b, les distances 70 et 71, correspondant à une abscisse 72 mesurée parallèlement à l'axe 73 de la molette, entre les filets 74 et 75 d'une part et 75 et 76 d'autre part, sont égales entre elles, et ainsi de suite le long de l'élévation à l'abscisse 72. Il en est de même pour chacune des parties 34, 35, 36 et 37.

De manière plus générale, le profil de base des filets présente une forme polygonale ou quelconque. Parmi les formes polygonales, on distingue notamment des triangles pointus, tronqués et arrondis, symétriques ou asymétriques.

La tige 38A, après au moins un tour complet en contact contre la molette 39, devient la vis 38B dont les filets présentent un pas variant de la même façon que ceux de la molette 39, en commençant par décroître le plus possible à partir d'une tête 67 de la vis 38B, avant de croître fortement et le plus rapidement possible. En effet dans l'exemple, la forte pente de croissance de pas permet un rattrapage dans la totalité de l'intervalle, en six filets au plus.

Le procédé de roulage d'une tige au moyen de deux molettes selon l'invention comporte, par rapport à l'état de la technique actuel, une étape dans laquelle on roule la tige avec un pas variable.

La mise au point de l'invention a nécessité de mesurer précisément les distances, écarts et pas de molette. Un appareil appelé contouroscope est souvent utilisé, à cet effet, par l'homme du métier pour mesurer et vérifier les pas des molettes sur toute leur surface périphérique et transcrire les résultats par informatique pour en déduire d'éventuelles dégradations des filets. Les mesures sont prises par exemple tous les quarts de tour.

Dans un exemple, la variation de pas est linéaire par morceaux. Ainsi, un premier morceau 34 correspond à un pas régulier comme les vis de l'état de la technique. Un morceau 35 correspond à une décroissance du pas, de façon à aborder une valeur minimale. Un morceau 36 permet une stabilisation à un pas le plus faible possible. Un morceau 37, en forte croissance, assure la répartition des efforts sur plusieurs, deux, trois ou quatre filets de manière à renforcer le maintien.

Concernant la partie 35, dans laquelle le pas décroît, on observe une inclinaison plus forte des filets en bas du dessin, où les filets tendent à être verticaux, qu'en haut du dessin où ils tendent à être horizontaux. Dans la partie 37, il en va à l'inverse. Dans tous les cas, à une abscisse donnée, les distances entre les filets sont constantes.

Typiquement, un écrou standard peut être vissé autour de la vis 38B, sans que se produise un auto-serrage, contrairement aux filetages à pas variable de l'état de la technique. Toutefois, il serait possible de modifier en plus le pas d'un écrou pour obtenir un tel auto-serrage.

Dans une variante, on utilise un outil de roulage comportant deux peignes plats rectangulaires du même type que ceux de la figure 2. Ces peignes présentent une série de filets obliques allongés selon un grand côté du rectangle, et aptes à déformer une tige pour réaliser une vis selon l'invention. Les filets présentent aussi un profil de base triangulaire. Pour une même abscisse mesurée sur un petit côté du rectangle, toutes les têtes de filets sont séparées les unes des autres par une même distance.

Le procédé de roulage d'une tige au moyen de deux peignes comporte, par rapport à l'état de la technique actuel, une étape dans laquelle on roule la tige avec un pas variable.

Dans une autre variante, pour fabriquer un tel écrou, on utilise un moule présentant une paroi intérieure dont au moins une partie est filetée, le filetage étant une contrepartie du filetage de la vis à pas variable selon l'invention.

Dans une variante, l'invention porte sur un écrou à pas variable que l'on peut visser autour d'une vis standard. Un tel écrou comporte une paroi intérieure dont une partie présente un filetage. Le filetage présente un pas dont la valeur varie dans un petit intervalle prédéfini, entre un minimum et un maximum. L'intervalle appartient à une tolérance fixée, par exemple normalisée. De préférence, le long de la paroi intérieure, le pas varie de manière maîtrisée en fonction du cas de charge appliqué.

Le procédé d'usinage d'un tel écrou à pas variable selon l'invention comporte une étape dans laquelle on réalise le filetage intérieur au moyen d'un outil à fileter.

Dans une variante, on utilise un moule comportant en son centre une pièce présentant une forme de vis dont le filetage est une contrepartie du filetage de l'écrou à pas variable selon l'invention.

Les figures 4a, 4b, 4c et 4d montrent un deuxième exemple de variation de pas des filets d'une vis et d'une molette de roulage selon l'invention. L'amplitude de variation de pas de cet exemple est plus réaliste que la précédente car elle n'est pas représentée graphiquement.

Les molettes et les peignes mis en oeuvre dans cet exemple ne sont pas représentés sur les figures mais sont du même type que ceux décrits avec les figures 1 et 2.

On considère, dans cet exemple, un pas de référence égal à 1 millimètre. Le pas de vis varie donc, de façon maîtrisée. Selon l'invention, la maîtrise de variation de pas est obtenue avec une précision de l'ordre du micromètre au sein d'un intervalle prédéfini.

L'intervalle appartient ici à une tolérance fixée, par exemple une norme ISO. Cette norme présente un minimum de 0,990 pour la vis et de 0,994 pour la molette et un maximum de 1,010 pour la vis et de 1,014 pour la molette. La tolérance est donc de 20 micromètres dans les deux cas, ce qui représente un ratio de 2% du pas. Dans cet exemple, le long de la vis, à partir de la tête, le pas est d'abord stable, puis décroissant, et enfin de nouveau croissant avant de se stabiliser.

Le tableau de la figure 4a montre qu'il existe ici aussi un rapport de 1,004 entre un pas de molette et un pas de vis correspondant. Ce rapport est un exemple relatif au roulage d'une pièce à base de nickel que l'on a portée à une température élevée pendant quelques secondes. Dans des variantes, le rapport est différent, par exemple égal à 1 pour un roulage à froid.

Entre les filets 1' à 2' et 2' à 3', les pas restent constants 38 à 1 pour la vis et 1,004 pour les molettes. Entre les filets 3'à 4' et 4'à 5', les pas subissent une décroissance moyenne 39 jusqu'à atteindre 0,998 pour la vis et 1,002 pour les molettes. Entre les filets 5'à 6', les pas subissent une décroissance importante 40 jusqu'à atteindre 0,993 pour la vis et 0,997 pour les molettes. Entre les filets 6' à 7', les pas subissent une faible décroissance 41 jusqu'à atteindre 0,992 pour la vis et 0,996 pour les molettes. Entre les filets 7'à 9', les pas restent constants 42 à 0,992 pour la vis et 0,996 pour les molettes. Entre les filets 9' à 10', les pas subissent une croissance moyenne 43 jusqu'à atteindre 0,993 pour la vis et 0,997 pour les molettes. Entre les filets 10' à 11', les pas subissent une croissance importante 44 jusqu'à atteindre 0,997 pour la vis et 1,001 pour les molettes. Entre les filets 11' à 16', les pas subissent une croissance moyenne 45 jusqu'à atteindre 1,002 pour la vis et 1,006 pour les molettes. Entre les filets 16' et 19', les pas respectent une constante 46 égale à 1,002 pour la vis et à 1,006 pour les molettes.

La pente 47 de décroissance de pas subit une décélération 41 avant un retour au pas constant 42 de valeur proche de la limite minimale de tolérance. Une telle décélération permet de rejoindre la zone de transition 42 avec douceur.

Une pente 48 de croissance de pas présente donc trois inclinaisons, à savoir d'abord la première inclinaison faible 43, puis forte 44, et enfin l'inclinaison modérée 45.

Les filets de la vis présentent un pas variant de la même façon que ceux de la molette, en commençant par stagner puis décroître pour croître ensuite. On peut faire décroître le pas de vis, puis le faire croître à la vitesse souhaitée en appliquant une accélération de pente.

Le pas de vis varie donc, de façon maîtrisée avec une précision de l'ordre du micromètre, dans un intervalle prédéfini, entre un minimum de 0,992 et un maximum de 1,002. Dans l'exemple, le maximum est assez éloigné du maximum de la tolérance.

Le pas des molettes varie, également avec une précision de l'ordre du micromètre, dans un intervalle prédéfini, entre un minimum de 0,996 et un maximum de 1,006.

De préférence, et d'une manière générale, l'idée de l'invention est d'utiliser des extremums les plus proches possibles de la tolérance choisie.

Selon l'invention, on maintient un écart de deux micromètres entre les valeurs extrêmes du pas de vis et les extremums de l'intervalle de tolérance car la précision de roulage est aujourd'hui de l'ordre d'un micromètre. Cet écart vise à ne pas dépasser la tolérance imposée.

Dans un exemple, la variation de pas est linéaire par morceaux.

Dans un exemple, on peut expliquer la répartition des efforts pour l'exemple de vis 66 cité ci-dessus comme suit :

La figure 4d représente schématiquement une vue en coupe d'un écrou standard 65 vissé autour d'une vis 66 selon l'invention. Une tête 81 de la vis 66 et l'écrou standard 65 enserrent deux plaques 82 et 83 l'une contre l'autre. L'écrou 65 est présenté en situation de recul en traits pleins, et en situation vissée en pointillés.

Les filets 1' à 19' de la vis 66 correspondent à ceux des figures 4a et 4b. Les pointillés symbolisent des filets 49 à 63 de l'écrou standard 65 au moment du contact avec la plaque 83, en fin de vissage. Au début du serrage, lorsque l'écrou entre en contact avec la plaque 83, on a l'impression que rien ne bouge, mais du fait de l'apparition de deux forces d'écartement, représentées par des flèches 84 et 85, des deux plaques 82 et 83, les filets de l'écrou 65 se déforment et reculent d'une distance 64 de quelques dixièmes de millimètres par rapport à la tête 81 de vis 66.

A ce moment là, les filets resserrés 49 à 63 se partagent les efforts comme suit.

Les filets 49 à 52 de l'écrou standard 65, correspondant aux zones 38 et 39, appuient faiblement, mais de manière équilibrée, sur les filets 2' à 5' de la vis 66. L'appui faible d'un filet de l'écrou 65 sur un filet de la vis 66 est représenté schématiquement par une seule flèche à double sens.

Les filets 53 à 55 de l'écrou standard 65, correspondant aux zones 40 à 42, appuient moyennement, mais de manière équilibrée, sur les filets 6' à 8' de la vis 66. L'appui moyen d'un filet de l'écrou 65 sur un filet de la vis 66 est représenté schématiquement par deux flèches à double sens.

Les filets 56 à 58 de l'écrou standard 65, correspondant aux zones 42, 43 et 44, appuient fortement, mais de manière équilibrée, sur les filets 9' à 11' de la vis 66. L'appui fort d'un filet de l'écrou 65 sur un filet de la vis 66 est représenté schématiquement par trois flèches à double sens.

Les filets 59 à 60 de l'écrou standard 65 correspondant à une première partie de la zone 45, appuient moyennement, mais de manière équilibrée, sur les filets 12' et 13' de la vis 66.

Les filets 61 à 63 de l'écrou standard 65 correspondant à une deuxième partie de la zone 45, appuient faiblement, mais de manière équilibrée, sur les filets 14' à 16' de la vis 66.

Dans ce cas, la répartition des charges est homogénéisée sur tous les filets de la vis grâce à la variation de pas de la vis, et ainsi ne s'exerce plus majoritairement sur les premiers filets comme dans l'état de la technique.

Généralement, on obtient un gain de 5 à 10% de la tenue mécanique, notamment concernant les caractéristiques de tenue en fatigue, pour une pièce filetée avec un pas variable selon l'invention.

## Revendications

1. Vis (38B ; 66) ou écrou présentant un filetage (68) dont un pas (79) varie dans un intervalle prédéfini, entre un minimum et un maximum,
- l'intervalle appartenant à une tolérance fixée,
- le pas décroissant (35 ; 47) et croissant (37 ; 48) de manière maîtrisée,
**caractérisé en ce que**, à l'endroit vissé,
- la pente de décroissance de pas présente deux inclinaisons, à savoir une inclinaison moyenne (39 ; 41) et une inclinaison forte (40), et/ou
- la pente de croissance de pas présente deux inclinaisons, à savoir une inclinaison moyenne (43 ; 45) et une inclinaison forte (44).

2. Vis ou écrou selon la revendication 1, **caractérisé en ce que**
- la pente de décroissance de pas présente trois inclinaisons, à savoir d'abord une première inclinaison moyenne (39), puis l'inclinaison forte (40), suivie par une deuxième inclinaison moyenne (41), et/ou
- la pente de croissance de pas présente trois inclinaisons, à savoir d'abord une première inclinaison moyenne (43), puis l'inclinaison forte (44), suivie par une deuxième inclinaison moyenne (45) plus longue que la première et créant une inflexion par rapport à l'inclinaison forte, cette inflexion permettant un rattrapage dans la totalité de la tolérance, en six filets au plus.

3. Vis ou écrou selon l'une des revendications 1 à 2, **caractérisé en ce que**
- la tolérance fixée est une tolérance normalisée,
- la maîtrise de variation de pas correspond à une précision de l'ordre du micromètre.

4. Vis selon l'une des revendications 1 à 3, **caractérisée en ce que**
- le long de la vis, à partir de sa tête, le pas décroît puis croît,
- avant et après la variation, le pas est constant (34 ; 38; 46) et présente une valeur égale à 1,
- après avoir été décroissant, et avant d'être croissant, le pas est constant (36 ; 42) et présente une valeur proche du minimum de la tolérance.

5. Outil de roulage de type molette cylindrique (21 ; 22 ; 39) présentant une série de filets hélicoïdaux (40) allongés selon un grand côté du rectangle, et aptes à déformer une tige pour réaliser une vis selon l'une des revendications 1 à 4, les filets présentant un profil de base dont un sommet est appelé tête de filet, **caractérisé en ce que**
- pour une même abscisse (72) le long de la molette, toutes les têtes de filets sont séparées les unes des autres par une même distance (70 ; 71 ; 78).

6. Procédé de roulage d'une tige au moyen de deux molettes à pas variable selon la revendication précédente, dans lequel
- on règle les molettes en concordance et on les indexe,
- on chauffe la tige,
- on cale la tige contre une première molette, contre une butée (26) et sur un support (25), le support permettant le un réglage en hauteur de la tige, parallèlement à l'axe des molettes,
- on approche une deuxième molette de manière à enserrer la tige,
- on fait tourner les molettes dans un même sens pour faire rouler la vis sur elle-même et ainsi rouler la tige avec un pas variable.

7. Outil de roulage de type peigne plat rectangulaire (28 ; 29) présentant une série de filets obliques allongés selon un grand côté du rectangle, et aptes à déformer une tige pour réaliser une vis selon l'une des revendications 1 à 4, les filets présentant un profil de base dont un sommet est appelé tête de filet, **caractérisé en ce que**
- pour une même abscisse mesurée sur un petit côté du rectangle, toutes les têtes de filets sont séparées les unes des autres par une même distance.

8. Procédé de roulage d'une tige au moyen de deux peignes à pas variable selon la revendication précédente, dans lequel
- on règle les peignes en concordance et on les indexe,
- on positionne la tige contre une extrémité d'un premier peigne, parallèlement à une largeur de ce peigne,
- on plaque une extrémité opposée d'un deuxième peigne, parallèlement au premier peigne, de manière à enserrer la tige,
- on fait aller ou aller et venir en translation au moins un peigne pour faire rouler la vis sur elle-même et ainsi rouler la tige avec un pas variable.

9. Procédé de moulage d'une vis selon l'une des revendications 1 à 4, dans lequel
- on utilise un moule présentant une paroi intérieure dont au moins une partie est filetée, ce filetage étant une contrepartie du filetage de la vis.

10. Procédé de moulage d'un écrou selon l'une des revendications 1 à 3, dans lequel
- on utilise un moule présentant en son centre une vis dont le filetage est une contrepartie du filetage de l'écrou.

## Claims

1. A screw (38B; 66) or a nut provided with a thread (68) whose pitch (79) varies within a predefined range, between a minimum and a maximum value,
- the range belonging to a fixed tolerance,
- the pitch decreasing (35; 47) and increasing (37; 48) in a controlled manner,
**characterised in that**, at the screwed location,
- the decreasing slope of the pitch has two angles of incline, i.e. a moderate angle of incline (39; 41) and a steep angle of incline (40), and/or
- the increasing slope of the pitch has two angles of incline, i.e. a moderate angle of incline (43; 45) and a steep angle of incline (44).

2. A screw or nut according to claim 1, **characterised in that**
- the decreasing slope of the pitch has three angles of incline, i.e. a first moderate angle of incline (39) then a steep angle of incline (40), followed by a second moderate angle of incline (41), and/or
- the increasing slope of the pitch has three angles of incline, i.e. a first moderate angle of incline (43) then a steep angle of incline (44), followed by a second moderate angle of incline (45), longer than the first angle of incline and creating an inflection in relation to the steep angle of incline, this inflection allowing for correction within the entire tolerance range, for six threads at most.

3. A screw or nut according to one of claims 1 to 2, **characterised in that**
- the tolerance range set is a standardised tolerance range,
- pitch variation control corresponds to an accuracy level of one micrometre.

4. A screw according to one of claims 1 to 3, **characterised in that**
- starting from the screw head, the pitch decreases then increases along the length of the screw,
- before and after variation, the pitch has a constant value (34; 38; 46) equal to 1,
- after decreasing and before increasing, the pitch has a constant value (36; 42) close to the minimum tolerance value.

5. A thread rolling tool, such as a cylindrical threading form tool (21; 22; 39) provided with a series of helical threads (40) extending along a large side of the rectangle and capable of deforming a rod to produce a screw according to one of claims 1 to 4, the threads having a basic profile whose apex is referred to as the thread crest, **characterised in that**
- for the same abscissa (72) along the threading form tool, all of the thread crests are separated from each other by the same distance (70; 71; 78).

6. A thread rolling method for a rod using two variable pitch threading form tools according to the previous claim, wherein
- the threading form tools are configured consistent with each other and are indexed,
- the rod is heated,
- the rod is pressed against a first threading form tool, against an abutment (26) and on a support (25), the support enabling the rod height to be configured, parallel to the axis of the threading form tools,
- a second threading form tool is brought closer so as to clamp the rod,
- the threading form tools are rotated in the same direction so as to roll the screw around itself and thus roll the rod with a variable pitch.

7. A thread rolling tool, such as a rectangular flat threading die (28; 29) provided with a series of oblique threads extending along a large side of the rectangle and capable of deforming a rod to produce a screw according to one of claims 1 to 4, the threads having a basic profile whose apex is referred to as the thread crest, **characterised in that**
- for the same abscissa measured over a small side of the rectangle, all thread crests are separated from each other by the same distance.

8. A thread rolling method for a rod using two variable pitch threading dies according to the previous claim, wherein
- the threading dies are configured consistent with each other and are indexed,
- the rod is placed against one end of a first threading die, parallel to a width of this threading die,
- an opposite end of a second threading die is pressed against the rod in a position parallel to the first threading die so as to clamp the rod,
- at least one threading die is moved forwards or backwards and forwards in translation so as to roll the screw around itself and thus roll the rod with a variable pitch.

9. A method for moulding a screw according to one of claims 1 to 4, wherein
- a mould is used provided with an inner wall, at least part of which is threaded, this threading being the counterpart to the threading of the screw.

10. A method for moulding a nut according to one of claims 1 to 3, wherein
- a mould is used provided with a screw at its centre, the threading of which is a counterpart to the threading of the nut.

## Patentansprüche

1. Schraube (38B; 66) oder Mutter mit einem Gewinde (68), bei dem eine Gewindesteigung (79) in einem vordefinierten Intervall zwischen einem Mindest- und einem Höchstwert variiert,
- wobei das Intervall innerhalb einer festgelegten Toleranz liegt,
- und die Steigung in einer beherrschten Form ab- (35; 47) und zunimmt (37; 48),
**dadurch gekennzeichnet, dass** an der verschraubten Stelle,
- die Abnahmeschräge der Steigung zwei Neigungen aufweist, nämlich eine mittlere Neigung (39; 41) und eine starke Neigung (40), und/oder
- die Zunahmeschräge der Steigung zwei Neigungen aufweist, nämlich eine mittlere Neigung (43; 45) und eine starke Neigung (44).

2. Schraube oder Mutter nach Anspruch 1, **dadurch gekennzeichnet, dass**
- die Abnahmeschräge der Steigung drei Neigungen aufweist, nämlich zuerst eine erste mittlere Neigung (39), gefolgt von einer starken Neigung (40), wiederum gefolgt von einer zweiten mittleren Neigung (41), und/oder
- die Zunahmeschräge der Steigung drei Neigungen aufweist, nämlich zuerst eine erste mittlere Neigung (43), gefolgt von einer starken Neigung (44), wiederum gefolgt von einer zweiten mittleren Neigung (45), die länger ist, als die erste Neigung, und die eine Biegung im Verhältnis zur starken Neigung aufweist, wobei diese Biegung einen Ausgleich innerhalb der gesamten Toleranz in höchstens sechs Gewindegängen möglich macht.

3. Schraube oder Mutter nach einem der Ansprüche 1 bis 2, **dadurch gekennzeichnet, dass**
- die festgelegte Toleranz eine genormte Toleranz ist,
- die Beherrschung der Steigungsvariation einer Präzision in der Größenordnung des Mikrometers entspricht.

4. Schraube nach einem der Ansprüche 1 bis 3, **dadurch gekennzeichnet, dass**
- die Steigung entlang der Schraube ausgehend vom Kopf abnimmt und danach zunimmt,
- die Steigung vor und nach der Variation konstant (34; 38; 46) ist und einen Wert gleich 1 aufweist,
- die Steigung nach der Abnahme und vor der Zunahme konstant (36; 42) ist und einen Wert nahe dem Mindestwert der Toleranz aufweist.

5. Walzwerkzeug in der Art eines zylindrischen Gewindeschneidkopfes (21; 22; 39) mit einer Reihe von Gewindegängen (40), die entlang einer großen Seite des Rechtecks angeordnet sind, und die in der Lage sind, einen Stift zu verformen, um eine Schraube nach einem der Ansprüche 1 bis 4 zu erzeugen, wobei die Gewindegänge ein Grundprofil aufweisen, bei dem ein Scheitelpunkt Gewindekopf genannt wird, **dadurch gekennzeichnet, dass**
- alle Gewindeköpfe bei einer gleichen Abszisse (72) entlang des Gewindeschneidkopfes durch einen selben Abstand (70; 71; 78) voneinander getrennt sind.

6. Verfahren zum Walzen eines Stifts mithilfe zweier Gewindeschneidköpfe mit variabler Steigung nach dem vorherigen Anspruch, bei dem
- man den Gewindeschneidkopf übereinstimmend einstellt und ihn indexiert,
- man den Stift erhitzt,
- man den Stift gegen einen ersten Gewindeschneidkopf, gegen einen Anschlag (26) und auf einen Support (25) anschlägt, wobei es der Support möglich macht, den Stift parallel zur Achse der Gewindeschneidköpfe in der Höhe einzustellen,
- man einen zweiten Gewindeschneidkopf annähert, um den Stift einzuspannen,
- man die Gewindeschneidköpfe in eine selbe Richtung drehen lässt, um die Schraube um sich selbst drehen zu lassen, und somit den Stift mit einer variablen Steigung zu walzen.

7. Walzwerkzeug in der Art einer rechteckigen flachen Kammplatte (28; 29) mit einer Reihe von Gewindegängen, die schräg entlang einer großen Seite des Rechtecks angeordnet sind, und die in der Lage sind, einen Stift zu verformen, um eine Schraube nach einem der Ansprüche 1 bis 4 zu erzeugen, wobei die Gewinde ein Grundprofil aufweisen, bei dem ein Scheitelpunkt Gewindekopf genannt wird, **dadurch gekennzeichnet, dass**
- alle Gewindeköpfe bei einer gleichen Abszisse, die an der kleinen Seite des Rechtecks gemessen wird, durch einen selben Abstand voneinander getrennt sind.

8. Verfahren zum Walzen eines Stifts mithilfe von zwei Kammplatten mit variabler Steigung nach dem vorherigen Anspruch, bei dem
- man die Kammplatten übereinstimmend einstellt und man sie indexiert,
- man den Stift gegen ein Ende einer ersten Kammplatte, parallel zu einer Breite dieser Kammplatte positioniert,
- man ein gegenüber liegendes Ende einer zweiten Kammplatte parallel zur ersten Kammplatte andrückt, um den Stift einzuspannen,
- man zumindest eine Kammplatte verschiebt, oder hin und her schiebt, um die Schraube um sich selbst drehen zu lassen und den Stift mit einer variablen Steigung zu walzen.

9. Verfahren zum Formgießen einer Schraube nach einem der Ansprüche 1 bis 4, bei dem
- man eine Form mit einer Innenwand verwendet, von der zumindest ein Abschnitt ein Gewinde aufweist, wobei dieses Gewinde das Gegenstück des Gewindes der Schraube darstellt.

10. Verfahren zum Formgießen einer Mutter nach einem der Ansprüche 1 bis 3, bei dem
- man eine Form verwendet, die in ihrer Mitte eine Schraube aufweist, deren Gewinde ein Gegenstück des Gewindes der Mutter ist.
